(19) **Europäisches Patentamt European Patent Office Office européen des brevets**

(11) **EP 4 654 418 A1**

(12) **EUROPEAN PATENT APPLICATION**
published in accordance with Art. 153(4) EPC

(43) Date of publication:
26.11.2025 Bulletin 2025/48

(21) Application number: 23932754.7

(22) Date of filing: 31.10.2023

(51) International Patent Classification (IPC):
$H02J\ 3/32^{(2006.01)}$       $H02J\ 7/00^{(2006.01)}$
$H01M\ 10/42^{(2006.01)}$       $H01M\ 10/44^{(2006.01)}$

(52) Cooperative Patent Classification (CPC):
H01M 10/42; H01M 10/44; H02J 3/32; H02J 7/00

(86) International application number:
PCT/CN2023/128065

(87) International publication number:
WO 2024/212483 (17.10.2024 Gazette 2024/42)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 11.04.2023 CN 202310376686
11.04.2023 CN 202310376690

(71) Applicant: SHENZHEN POWEROAK NEWENER
CO., LTD
Shenzhen, Guangdong 518000 (CN)

(72) Inventors:
• MA, Hui
Shenzhen, Guangdong 518000 (CN)

• LEI, Jianhua
Shenzhen, Guangdong 518000 (CN)
• GUO, Zhihua
Shenzhen, Guangdong 518000 (CN)
• QIN, Geng
Shenzhen, Guangdong 518000 (CN)
• CANG, Wentao
Shenzhen, Guangdong 518000 (CN)
• LI, Fan
Shenzhen, Guangdong 518000 (CN)

(74) Representative: Santarelli
Tour Trinity
1 bis Place de la Défense
92400 Courbevoie (FR)

(54) **ENERGY STORAGE DEVICE ALTERNATING CURRENT MULTI-PHASE SYSTEM AND ELECTRIC QUANTITY BALANCE CONTROL METHOD THEREFOR**

(57) Disclosed in the present invention are an energy storage device alternating current multi-phase system and an electric quantity balance control method therefor. The electric quantity balance control method comprises: S1: obtaining remaining electric quantities of a plurality of energy storage devices; S2: calculating an average of the remaining electric quantities of the plurality of energy storage devices; S3: separately subtracting the average calculated in step S2 from the remaining electric quantity of each energy storage device to obtain a difference, and if the difference is greater than 0, increasing an output voltage of the corresponding energy storage device so as to increase output power of the energy storage device, or if the difference is less than 0, reducing the output voltage of the corresponding energy storage device so as to decrease the output power of the energy storage device. According to the energy storage device alternating current multi-phase system and the electric quantity balance control method therefor provided in the present invention, the problem of the overall endurance of the system being greatly shortened is effectively solved.

EP 4 654 418 A1

Obtaining remaining electric quantities of a plurality of energy storage devices — S1

Calculating an average value of the remaining electric quantities of the plurality of energy storage devices — S2

Subtracting the average value from the remaining electric quantity of each energy storage device to obtain a corresponding difference;
if the corresponding difference is greater than zero, increasing an output voltage of the energy storage device to increase the output power; otherwise, if the corresponding difference is less than zero, reducing the output voltage of the energy storage device to decrease the output power — S3

FIG.1

**Description**

**Technical Field**

The present invention relates to the technical field of energy storage devices, and in particular, relates to an energy storage device alternating current multi-phase system and an electric quantity balance control method therefor.

**Background of the Invention**

Energy storage power supply is a kind of device that can store electric energy and release it when needed. Because of its advantages of safety, portability, high efficiency and environmental friendliness, energy storage power supply has been widely used in aerial photography, surveying and mapping, mobile medical care, self-driving travel, picnic and camping, entertainment life and other fields. In addition, the energy storage power supply with large capacity can also provide emergency/standby power supply for families/business, and meet basic requirements of household/business electric loads in the case of power failure.

In the prior art, an AC dual live-wire system composed of two independent energy storage power supplies and an AC three-phase system composed of three independent energy storage power supplies suffer from a greatly shortened overall endurance, because the system can only be shut down due to the inconsistency of batteries of two or three said independent energy storage power supplies when any one of the energy storage power supplies runs out of power. Especially in the case where a single energy storage power supply is connected with a stand-alone load or the stand-alone load of the multiple energy storage power supplies is unbalanced, it will further lead to inconsistent power consumption of the energy storage power supplies included in the system. The energy storage power supply connected with a stand-alone load of a larger power will have a shorter battery duration and its power will run out earlier than that of another energy storage power supply connected with a stand-alone load with a lower power.

The disclosure of the above background is only used to assist in understanding the concept and technical schemes of the present invention, which does not necessarily belong to the prior art of this patent application. In the absence of clear evidence that the above content has been disclosed on the filing date of this patent application, the above background should not be used to evaluate the novelty and creativity of this application.

**Summary of the Invention**

In order to solve the above technical problems, the present invention provides an energy storage device alternating current multi-phase system and an electric quantity balance control method therefor, which effectively solve the problem that the overall endurance of the system is greatly shortened.

In order to achieve the aforesaid objective, the present invention adopts the following technical solutions.

In a first aspect, the present invention discloses an electric quantity balance control method for an energy storage device alternating current multi-phase system, which includes the following steps: S1: obtaining remaining electric quantities of a plurality of energy storage devices; S2: calculating an average value of the remaining electric quantities of the plurality of energy storage devices; S3: subtracting the average value calculated in step S2 from the remaining electric quantity of each energy storage device to obtain a corresponding difference, and for each energy storage device, if the corresponding difference is greater than 0, increasing an output voltage of the energy storage device to increase the output power of the energy storage device, otherwise, if the corresponding difference is less than 0, reducing the output voltage of the energy storage device to decrease the output power of the energy storage device.

In some embodiments, the step S3 specifically includes: subtracting the average value $SOC_{ave}$ calculated in step S2 from the remaining electric quantity $SOC_i$ of the ith energy storage device to obtain the difference, and adjusting the output voltage of the corresponding energy storage device to a target voltage value $U_{iRef}$ to adjust the output power of the energy storage device, wherein the target voltage value is defined by $U_{iRef} = U_{rated} + \Delta U_i$, $U_{rated}$ is the rated voltage of the energy storage device, $\Delta U_i$ is a target voltage adjustment value calculated according to the difference value, $i$=1 to n, and n is the number of the energy storage devices.

In some embodiments, the target voltage adjustment value is defined by: $\Delta U_i = (SOC_i - SOC_{ave}) \times U_{rated}$, .

In some embodiments, after step S3, the method further includes iteratively executing steps S1 to S3 until the remaining electric quantities of all the energy storage devices become equal.

In some embodiments, the step S3 specifically includes:
subtracting the average value $SOC_{ave}$ calculated in step S2 from the remaining electric quantity $SOC_{i\_j}$ of the ith energy storage device to obtain the difference value, and adjusting the output voltage of the corresponding energy storage device to a stepping target voltage value $U_{iRef\_j}$ to adjust the output power of the energy storage device, wherein the stepping target voltage value is defined by $U_{iRef\_j} = U_{rated} + \Delta U_{i\_j}$, $U_{rated}$ is the rated voltage of the energy storage device, $\Delta U_{i\_j}$ is a target voltage adjustment value at the $j$th voltage adjustment performed on the $i$th energy storage device that is calculated according to the difference, $i$=1 to n, n is the number of the energy storage devices, and $j$ is the current number of times for voltage adjustment.

In some embodiments, the target voltage adjustment value at the $j$th voltage adjustment performed on the $i$th energy storage device is defined by: $\Delta U_{i\_j} = \Delta U_{SOC\_i\_j} * r2_i + \Delta U_{p\_i\_j} * r3_i$;

wherein $\Delta U_{SOC\_i\_j}$ is a first target voltage adjustment value at the $j$th voltage adjustment performed on the ith energy storage device that is calculated according to the difference, $\Delta U_{p\_i\_j}$ is a second target voltage adjustment value at the $j$th voltage adjustment performed on the $i$th energy storage device that is calculated according to the change of the AC side output power of the ith energy storage device, $r2_i$ and $r3_i$ are weights, and $r2_i + r3_i = 1$.

In some embodiments, the first target voltage adjustment value at the jth voltage adjustment performed on the $i$th energy storage device is defined by: $\Delta U_{SOC\_i\_j} = (SOC_{ij} - SOC_{ave}) \times U_{rated} \times r1_i$, wherein $r1_i$ is a proportional coefficient.

In some embodiments, the value of $r1_i$ is 10% to 20%.

In some embodiments, the second target voltage adjustment value at the $j$th voltage adjustment performed on the $i$th energy storage device is defined by: $\Delta U_{p\_i\_j} = K_{u\_i\_j} * \Delta U_{SOC\_i\_j}$, wherein $K_{u\_i\_j}$ is the power change ratio at the $j$th voltage adjustment performed on the ith energy storage device, and $K_{u\_i\_j} = (P_{m\_i\_j} - P_{m\_k0\_i\_j})/ P_{mMean\_i\_j}$, wherein $P_{m\_i\_j}$ is the AC side output power at the jth voltage adjustment performed on the ith energy storage device, $P_{mMean\_i\_j}$ is a periodic average of the AC side output power at the $j$th voltage adjustment performed on the ith energy storage device that is calculated by using sliding window filtering, and $P_{m\_k0\_i\_j}$ is the power value excluded from the sliding window filter at the $j$th voltage adjustment performed on the ith energy storage device.

In a second aspect, the present invention discloses an energy storage device alternating current multi-phase system, which includes: a plurality of energy storage devices and a system load, wherein the plurality of energy storage devices are in communication with each other, and the AC output side live wires of the plurality of energy storage devices are respectively connected to the system load, the neutral wires of the plurality of energy storage devices are connected to the neutral wire common point of the system load; the energy storage device alternating current multi-phase system is configured to perform electric quantity balance control on the plurality of energy storage devices using the electric quantity balance control method as described in the first aspect.

In some embodiments, the energy storage device alternating current multi-phase system further includes at least one stand-alone load, and the AC output side of at least one of the plurality of energy storage devices is separately connected with the stand-alone load.

In some embodiments, it further includes the following steps before the step S1: enabling the plurality of energy storage devices to communicate with each other for allocation of master and slave devices, and determining one of the plurality of energy storage devices as the master device and the other energy storage devices as the slave devices.

In some embodiments, the master device is configured to: send a power frequency phase signal to the slave device when the power frequency cycle of the master device crosses zero; obtain the remaining electric quantities of the plurality of energy storage devices; obtain the target voltage value of each of the energy storage devices according to the electric quantity balance control method described in the first aspect and send it to the corresponding slave device.

In some embodiments, the slave device is configured to: obtain and track the power frequency phase signal sent by the master device, and control the power frequency phase of the slave device to lag behind the power frequency phase of the master device.

In some embodiments, the number of the energy storage devices is two, the energy storage device alternating current multi-phase system is a split-phase dual live-wire system, and the power frequency phase of the slave device lags behind the power frequency phase of the master device by 180°.

In some embodiments, the number of the energy storage devices is three, the energy storage device alternating current multi-phase system is a three-phase four-wire system, the number of the slave devices is two, and the power frequency phase difference among the three energy storage devices is 120°.

In a third aspect, the present invention discloses a storage medium storing a computer program, wherein the computer program is set to be executable by a processor to execute the electric quantity balance control method described in the first aspect.

As compared to the prior art, the beneficial effects of the present invention lie in that: in the energy storage device alternating current multi-phase system and the electric quantity balance control method therefor according to the present invention, the output power of the energy storage devices is adjusted by adjusting the output voltage of the energy storage devices according to the remaining electric quantities of the energy storage devices, thereby realizing the active electric quantity balance control of the energy storage device alternating current multi-phase system, and effectively solving the problem that the on-load endurance of the system is shortened due to inconsistent SOC.

In the further scheme, the output power of the energy storage devices is adjusted by gradually adjusting the output voltage of the energy storage devices stepwise according to the remaining electric quantities of the energy storage devices, and the stability of the respective stand-alone load is taken into consideration in each adjustment of the output voltage. By gradually adjusting the output voltage of the energy storage devices stepwise in a cyclic manner, the power fluctuation of the stand-alone load is prevented so that the stand-alone load can work and be used normally under the rated voltage and within a certain voltage variation range, thereby making the system more stable. On the one hand, it avoids the inconsistency of power consumption of the energy storage devices included in the system, so that the battery duration of the energy storage devices is consistent. On the other hand, it ensures that all kinds of electrical devices can work and be used normally under the rated voltage and within a certain voltage variation range, and at the same time, it also avoids the operation of stand-alone loads under the condition of high or low voltages, thereby greatly prolonging the service life of the electrical devices, reducing energy consumption, reducing the possibility of electrical device damage to the greatest extent, and ensuring electrical safety.

## Brief Description of the Drawings

FIG. 1 is a flowchart diagram of an electric quantity balance control method for an energy storage device alternating current multi-phase system in the embodiment 1 of the present invention.

FIG. 2 is a block diagram of a split-phase double-live wire system in the preferred embodiment based on the embodiment 1 of the present invention.

FIG. 3 is a flowchart diagram illustrating phase control for master and slave devices of the split-phase double-live wire system in another preferred embodiment based on the embodiment 1 of the present invention.

FIG. 4 is a schematic view of adjusting the output power to balance the SOC in the split-phase dual-live wire system in another preferred embodiment based on the embodiment 1 of the present invention.

FIG. 5 is a control flowchart diagram for adjusting the output voltage to balance the SOC in the split-phase double-live wire system in another preferred embodiment based on the embodiment 1 of the present invention.

FIG. 6 is a block diagram of a three-phase four-wire system in another preferred embodiment based on the embodiment 1 of the present invention.

FIG. 7 is a flowchart diagram of an electric quantity balance control method for an energy storage device alternating current multi-phase system in the embodiment 2 of the present invention.

FIG. 8 is a block diagram of a split-phase double-live wire system in the preferred embodiment based on the embodiment 2 of the present invention.

FIG. 9 is a schematic view of adjusting the output power to balance the SOC in the split-phase dual-live wire system in another preferred embodiment based on the embodiment 2 of the present invention.

FIG. 10 is a control flowchart diagram for adjusting the output voltage to balance the SOC in the split-phase double-live wire system in another preferred embodiment based on the embodiment 2 of the present invention.

FIG. 11 is a block diagram of a three-phase four-wire system in another preferred embodiment based on the embodiment 2 of the present invention.

## Detailed Description of the Embodiments

Hereinafter, embodiments of the present invention will be described in detail. It should be emphasized that the following description is only exemplary, and is not intended to limit the scope and application of the present invention.

It shall be noted that when an element is said to be "fixed" or "disposed" on another element, it may be directly or indirectly located on the other element. When an element is said to be "connected" to another element, it may be directly or indirectly connected to the other element. In addition, the connection may be used for both fixing function and circuit/signal communication function.

It shall be appreciated that orientation or positional relationships indicated by terms such as "length", "width", "upper", "lower", "front", "rear", "left", "right", "vertical", "horizontal", "top", "bottom", "inner" and "outer" are orientation or positional relationships based on the attached drawings. These terms are only for the convenience of describing the embodiments of the present invention and simplifying the description, and do not indicate or imply that the referred devices or elements must have a specific orientation or must be constructed and operated in a specific orientation, and thus these terms should not be construed as limitations to the present invention.

In addition, terms "first" and "second" are only used for descriptive purposes, and should not be construed as indicating or implying relative importance or implicitly indicating the number of the indicated technical features. Thus, the features defined by the terms "first" and "second" may explicitly or implicitly include one or more said features. In the description of the embodiment of the present invention, the term "more" means two or more, unless otherwise specifically defined.

Embodiment 1

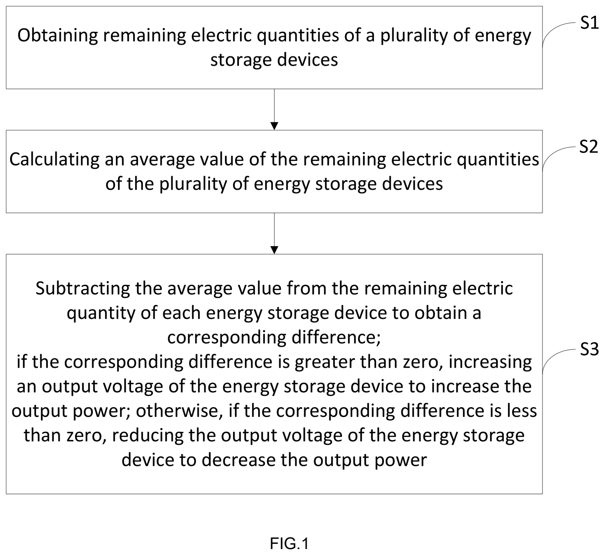

As shown in FIG. 1, the embodiment 1 of the present invention discloses an electric quantity balance control method for an energy storage device alternating current multi-phase system, which includes the following steps: S1: obtaining remaining electric quantities of a plurality of energy storage devices; S2: calculating an average value of the remaining electric quantities of the plurality of energy storage devices; S3: subtracting the average value calculated in step S2 from the remaining electric quantity of each energy storage device to obtain a corresponding difference, and for each energy storage device, if the corresponding difference is greater than 0, increasing an output voltage of the energy storage device so as to increase output power of the energy storage device, otherwise, if the corresponding difference is less than 0, reducing the output voltage of the energy storage device so as to decrease the output power of the energy storage device.

The step S3 specifically includes: subtracting the average value $SOC_{ave}$ calculated in step S2 from the remaining electric quantity $SOC_i$ of the ith energy storage device to obtain the difference, and adjusting the output voltage $U_i$ of the corresponding energy storage device to a target voltage value $U_{iRef}$ to adjust the output power of the energy storage device, wherein the target voltage value is defined by $U_{iRef} = U_{rated} + \Delta U_i$, $U_{rated}$ is the rated voltage of the energy storage device, $\Delta U_i$ is a target voltage adjustment value calculated according to the difference, $i$=1 to n, and n is the number of the energy storage devices. In some embodiments, the target voltage adjustment value is defined by $\Delta U_i = (SOC_i - SOC_{ave}) \times U_{rated}$.

The embodiment 1 of the present invention further discloses an energy storage device alternating current multi-phase system, which includes: a plurality of energy storage devices and a system load, wherein the plurality of energy storage devices are in communication with each other, and the AC output side live wires of the plurality of energy storage devices are respectively connected to the system load, the neutral wires of the plurality of energy storage devices are connected to the neutral wire common point of the system load; the energy storage device alternating current multi-phase system adopts the electric quantity balance control method as described in the above embodiment to perform electric quantity balance control on the plurality of energy storage devices.

The method further includes the following steps before step S1: enabling the plurality of energy storage devices to communicate with each other for allocation of master and slave devices, and determining one of the plurality of energy storage devices as the master device and the other energy storage devices as the slave devices. In some embodiments, the master device is configured to: send a power frequency phase signal to the slave device when the power frequency cycle of the master device crosses zero; obtain the remaining electric quantities of the plurality of energy storage devices; obtain the target voltage value of each of the energy storage devices according to the electric quantity balance control method as described in the above embodiment and send it to the corresponding slave device. The slave device is configured to: obtain and track the power frequency phase signal sent by the master device, and control the power frequency phase of the slave device to lag behind the power frequency phase of the master device.

In some embodiments, the number of the energy storage devices is two, the energy storage device alternating current multi-phase system is a split-phase dual live-wire system, and the power frequency phase of the slave device lags behind the power frequency phase of the master device by 180°. In some other embodiments, the number of the energy storage devices is three, the energy storage device alternating current multi-phase system is a three-phase four-wire system, the number of the slave devices is two, and the power frequency phase difference among the three energy storage devices is 120°.

The embodiment 1 of the present invention further discloses a storage medium which is characterized by storing a computer program, wherein the computer program is set to be executable by a processor to execute the steps of the electric quantity balance control method described in the above embodiment 1.

Optionally, the above storage medium may include, but is not limited to, various media that can store computer programs, such as a USB flash disk, a Read-Only Memory (ROM), a Random Access Memory (RAM), a mobile hard disk, a magnetic disk or an optical disk.

The energy storage device alternating current multi-phase system and the electric quantity balance control method therefor provided in the above embodiment 1 of the present invention will be further described hereinafter with reference to specific preferred embodiments.

The embodiment 1 of the present invention preferably provides a split-phase dual-live wire system, which is composed of two independent energy storage power supplies with AC output sides connected in series with an AC output phase difference of 180°, and neutral wires connected together to form a split-phase LI-N-L2 AC power supply system. Through the split-phase double-live wire system, the output AC voltage can be multiplied.

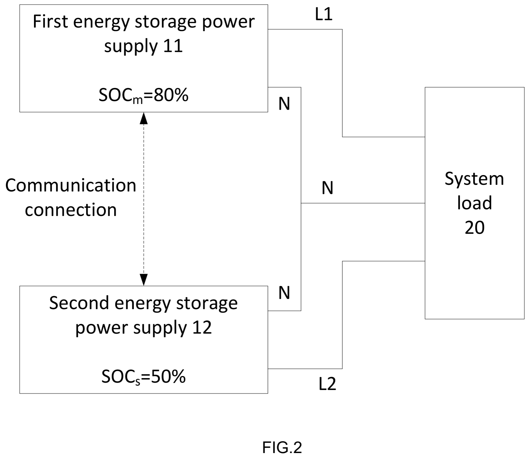

Specifically, as shown in FIG. 2, the split-phase dual-live wire system includes a first energy storage power supply 11 and a second energy storage power supply 12 that can output alternating current off grid and a system load 20 (in this embodiment, the system load is a dual-live wire load). The first energy storage power supply 11 and the second energy storage power supply 12 are in communication with each other, the AC output side neutral wires (N) of the first energy storage power supply 11 and the second energy storage power supply 12 are connected to the neutral wire common point of the system load 20, and the live wire (L1) of the first energy storage power supply 11 and the live wire (L2) of the second energy storage power supply 12 are respectively connected to the system load 20.

The output voltage $U_1$ of the first energy storage power supply 11 and the output voltage $U_2$ of the second energy storage power supply 12 in the split-phase dual-live wire system at the initial moment are both rated AC output voltage value $U_{rated}$ (100Vac or 120Vac).

In some embodiments, the electric quantity balance control method of the split-phase dual-live wire system includes the following steps:

A1: allocating master and slave devices;

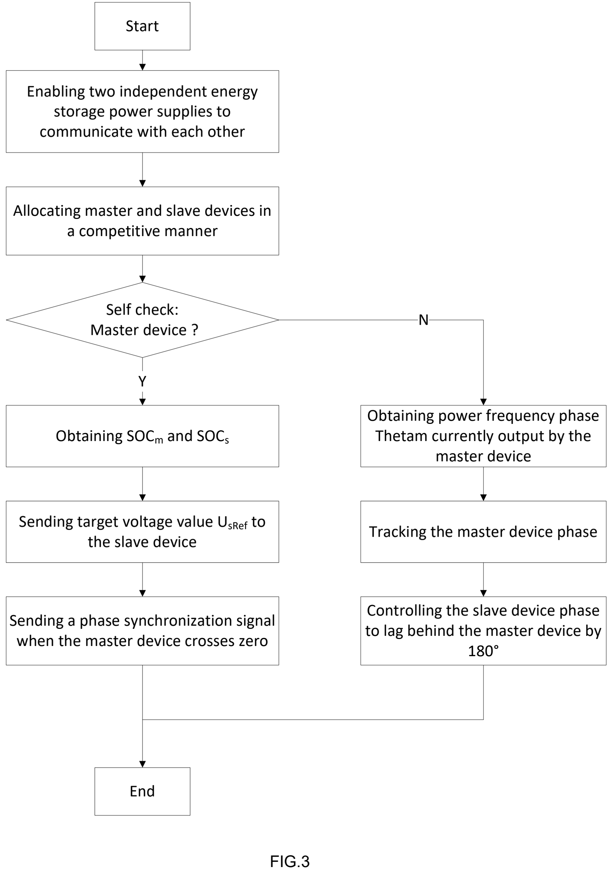

As shown in FIG. 3, the specific steps of allocating the master and slave devices include: enabling two independent energy storage power supplies to communicate with each other, and then allocating the master and slave devices in a competitive manner to confirm whether the power supply is the master device; if the power supply is the master device, then obtaining its current remaining electric quantity $SOC_m$ and the current remaining electric quantity $SOC_s$ of the slave device, and calculating the target voltage value $U_{mRef}$ of the master device and the target voltage value $U_{sRef}$ of the slave device, and then sending the corresponding target voltage value $U_{sRef}$ to the slave device, and further sending a phase synchronization signal to the slave device when the master device crosses zero; if the power supply is not the master device, then obtaining the power frequency phase Thetam currently output by the master device, tracking the master device phase, controlling the slave device phase to lag behind the master device by 180 degrees, and obtaining the its target voltage value $U_{sRef}$ sent by the master device.

In this embodiment, the first energy storage power supply 11 and the second energy storage power supply 12, which are independent of each other, communicate with each other to compete for the master device so that one is automatically allocated to be the master device and the other is allocated to be the slave device. In this embodiment, taking the case where the first energy storage power supply 11 is allocated to be the master device and the second energy storage power supply 12 is allocated to be the slave device as an example, then $U_m = U_1 = U_{rated}$, $U_s = U_2 = U_{rated}$, wherein $U_1$ represents the output voltage of the first energy storage power supply 11, $U_2$ represents the output voltage of the second energy storage power supply 12, $U_m$ represents the output voltage of the master device, and $U_s$ represents the output voltage of the slave device. The output voltages of the master device and the slave device are all equal to the rated AC output voltage value $U_{rated}$ at the initial moment. The master device is configured to obtain its remaining electric quantity $SOC_m$ and the current remaining electric quantity $SOC_s$ of the slave device, calculate the target voltage value $U_{mRef}$ of the master device and the target voltage value $U_{sRef}$ of the slave device, and then send the corresponding target voltage value $U_{sRef}$ to the slave device. The master device is further configured to send a power frequency phase signal to the slave device when the power frequency cycle of the master device crosses zero. The slave device is configured to obtain and track the power frequency phase signal sent by the master device, and at the same time, control the output phase of the slave device to differ from that of the master device by 180°.

In addition, it should be noted that in some embodiments, the master and slave devices may also be allocated in other ways for the energy storage power supplies. For example, one of the energy storage devices (that is, the energy storage power supply in this embodiment) is taken as the master device by separately providing a control unit in the energy storage device, and other energy storage devices are taken as the slave devices. In the above embodiment, only one slave device is involved, and in the case involving multiple slave devices, the address allocation of slave devices can be done by any existing slave device address allocation method. For example, 1) address allocation is completed by free competition; 2) the address is set for each slave device by setting the dip switch; 3) the address of each slave device is set through the keyboard or human-machine interface; 4) the address of the slave devices is set one by one through the computer serial port software; 5) the slave device inquires the status of the bus to constantly wait for the idle state to communicate with the master device, and the address is reassigned if there is a station address conflict.

A2: obtaining remaining electric quantities of a plurality of energy storage power supplies, and calculating an average value of the remaining electric quantities of the plurality of energy storage power supplies; and then subtracting the average from the remaining electric quantity of each energy storage power supply to obtain a corresponding difference, and for each energy storage power supply, if the corresponding difference is greater than 0, increasing an output voltage of the energy storage power supply so as to increase output power of the energy storage power supply, otherwise, if the corresponding difference is less than 0, reducing the output voltage of the energy storage power supply so as to decrease the output power of the energy storage power supply.

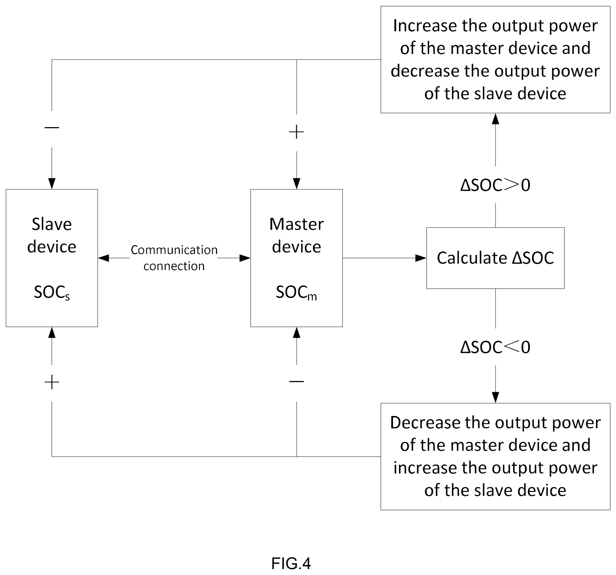

In this embodiment, the difference between the remaining electric quantities of the two energy storage power supplies is directly obtained, and electric quantity balance and output voltage control are carried out according to the difference being greater than 0 or less than 0. Specifically, as shown in FIG. 4, the master device calculates the current SOC difference between the master device and the slave device, denoted as $\Delta SOC = SOC_m - SOC_s$; and the master device enters the electric quantity balance-output voltage control mode based on the current SOC difference $\Delta SOC$.

(1) If the master device determines that the current $\Delta SOC > 0$, then the current electric quantity of the master device is higher than that of the slave device; the master device increases the output power and the slave device decreases the output power, thus realizing SOC equalization;

(2) if the master device determines that the current $\Delta SOC < 0$, then the current electric quantity of the master device is lower than that of the slave device; the master device decreases the output power and the slave device increases the output power, thus realizing SOC equalization.

The output port wire voltage $U_{LL}$ (i.e., the line voltage between L1 and L2) of the system load 20 is equal to the sum of the master device output voltage $U_m$ and the slave device output voltage $U_s$, that is, $U_{LL} = U_m + U_s$. In order to ensure the stability of on-load output, the split-phase dual-live wire system controls the output port wire voltage $U_{LL}$ to remain constant, i.e., 2 times of the rated voltage $U_{rated}$, such that $U_{LL} = U_{rated} * 2$. Therefore, the total output voltage of the split-phase dual-live wire system composed of two independent energy storage power supplies remains constant, i.e., $U_m + U_s = U_{rated} * 2$. Moreover, the AC output sides of the two energy storage power supplies in the split-phase dual-live wire system are connected in series, so the AC side currents of the two energy storage power supplies are equal, i.e., $I_m = I_s$, wherein $I_m$ is the current of the master device (i.e., the first energy storage power supply 11) and $I_s$ is the current of the slave device (i.e., the second energy storage power supply 12).

The output currents of the two energy storage power supplies in the split-phase double-live wire system are equal, so the adjustment of the output power of the energy storage power supply is realized by adjusting the AC output voltage. For example, if it is needed to increase the output power $P_m$ of the master device, then it is necessary to increase the current output voltage $U_m$ of the energy storage power supply to its corresponding target voltage value $U_{mRe}$, where $U_{mRef} = U_{rated} + \Delta U$, and $P_m = U_m * I_m$. Moreover, the output wire voltage of the split-phase dual-live wire system is defined by $U_{LL} = U_{rated} * 2 = U_m + U_s$. Since the output wire voltage of the system load 20 remains constant, when the output voltage of the master device increases, the slave device should correspondingly reduce its output voltage (reducing the current output voltage $U_s$ of the energy storage power supply to its corresponding target voltage value $U_{sRef}$), to decrease the output power thereof, i.e., $U_{sRef} = U_{rated} - \Delta U, P_s = U_s * I_s$.

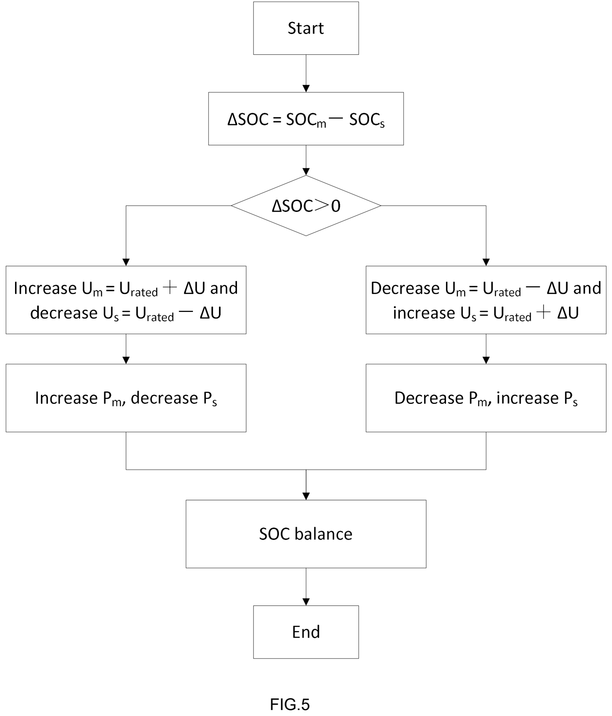

As shown in FIG. 5, when $\Delta SOC > 0$, the output voltage of the master device is increased, i.e., $U_m = U_{mRef} = U_{rated} + \Delta U$, and the output voltage of the slave device is decreased, i.e., $U_s = U_{sRef} = U_{rated} - \Delta U$, so as to further increase the output power $P_m$ of the master device and decrease the output power $P_s$ of the slave device, thus realizing SOC equalization. When $\Delta SOC < 0$, the output voltage of the master device is decreased, i.e., $U_m = U_{mRef} = U_{rated} - \Delta U$, and the output voltage of the slave device is increased, i.e., $U_s = U_{sRef} = U_{rated} + \Delta U$, so as to further decrease the output power $P_m$ of the master device and increase the output power $P_s$ of the slave device, thus realizing SOC equalization.

By dynamically adjusting the target voltage value $U_{mRef}$ of the master device and the target voltage value $U_{sRef}$ of the slave device, the dynamic adjustment of the output power $P_m$ of the master device and the output power $P_s$ of the slave device is realized, so as to further realize the adjustment of the battery discharge rate of the energy storage power supply and actively balance the SOC of the two energy storage power supplies.

The target voltage adjustment value is defined by $\Delta U = (SOC/2) * U_{rated}$, wherein $SOC_m$, $SOC_s$ and $\Delta SOC$ are all numbers from 0 to 1, which are expressed in percentage form. For example, the $SOC_m$ of the master device is 80%, the $SOC_s$ of the slave device is 50% and $\Delta SOC$ is 30%.

The embodiment 1 of the present invention further preferably provides a three-phase four-wire system, which is composed of three independent energy storage power supplies with AC output sides connected in star configuration with respective AC output phase difference of 120°, and neutral wires connected together to form a three-phase AC power supply system.

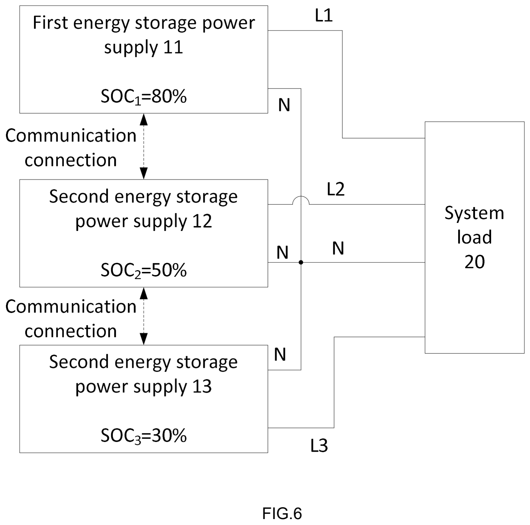

Specifically, as shown in FIG. 6, the three-phase four-wire system includes a first energy storage power supply 11, a second energy storage power supply 12 and a third energy storage power supply 13 that can output alternating current off grid and a system load 20 (in this embodiment, the system load is a three-phase load). The first energy storage power supply 11, the second energy storage power supply 12 and the third energy storage power supply 13 are in communication with each other, the AC output side neutral wires (N) of the first energy storage power supply 11, the second energy storage power supply 12 and the third energy storage power supply 13 are connected to the neutral wire common point of the system load 20, and the live wire (L1) of the first energy storage power supply 11, the live wire (L2) of the second energy storage power supply 12 and the live wire (L3) of the third energy storage power supply 13 are respectively connected to the system load 20.

The output voltage $U_1$ of the first energy storage power supply 11, the output voltage $U_2$ of the second energy storage power supply 12 and the output voltage $U_3$ of the third energy storage power supply 13 in the three-phase four-wire system at the initial moment are all rated AC output voltage value $U_{rated}$ (100Vac or 120Vac).

In some embodiments, the electric quantity balance control method of the three-phase four-wire system includes the following steps:

B1: allocating master and slave devices;

The specific steps of allocating the master and slave devices include: enabling three independent energy storage power supplies to communicate with each other, and automatically allocating the master and slave devices in a competitive manner so that one of the energy storage power supplies is determined as the master device while the other two energy storage power supplies are determined as the slave devices. The specific steps in the master and slave device allocation in this three-phase four-wire system differ from those in the split-phase dual-live wire system only in that the phase difference between the master device and the respective slave devices is 120°, while other specific process steps are the same, and this will not be further described herein.

B2: obtaining remaining electric quantities of a plurality of energy storage power supplies, and calculating an average value of the remaining electric quantities of the plurality of energy storage power supplies; and then subtracting the average value from the remaining electric quantity of each energy storage power supply to obtain a corresponding difference, and for each energy storage power supply, if the corresponding difference is greater than 0, increasing an output voltage of the corresponding energy storage power supply so as to increase output power of the energy storage power supply, otherwise, if the corresponding difference is less than 0, reducing the output voltage of the energy storage power supply so as to decrease the output power of the energy storage power supply.

In this embodiment, the master device obtains the remaining electric quantities $SOC_1$, $SOC_2$, $SOC_3$ of the energy storage power supplies; the phase difference between the master device and the respective slave devices is 120°, and the total output voltage of the three-phase four-wire system composed of the three independent energy storage power supplies remains constant.

The average value SOC of the three energy storage power supplies is calculated by: $SOC_{ave} = (SOC_1 + SOC_2 + SOC_3)/3$, and then the current $SOC_i$ ($i$=1, 2, 3) of the energy storage power supplies is compared with $SOC_{ave}$. If $SOC_i$ is equal to $SOC_{ave}$, then there is no need to increase or decrease the output power; if $SOC_i < SOC_{ave}$, then the output power is decreased; and if $SOC_i > SOC_{ave}$, then the output power is increased.

Because the total output voltage remains unchanged and the three-phase load remains unchanged, the total current I is unchanged, and thus the output power of each energy storage power supply is further increased or decreased by adjusting the voltage of each energy storage power supply in the present invention. The output voltage $U_1$ of the first energy storage power supply 11 is adjusted to its corresponding target voltage value $U_{1Ref} = U_{rated} + \Delta U_1$; the output voltage $U_2$ of the second energy storage power supply 12 is adjusted to its corresponding target voltage value $U_{2Ref} = U_{rated} + \Delta U_2$; the output voltage $U_3$ of the third energy storage power supply 13 is adjusted to its corresponding target voltage value $U_{3Ref} = U_{rated} + \Delta U_3$; wherein $\Delta U_1 + \Delta U_2 + \Delta U_3 = 0$. If the target voltage adjustment value $\Delta U_i$ ($i$=1, 2, 3) is zero, then it means that the remaining electric quantity of the corresponding energy storage power supply $SOC_i = SOC_{ave}$, and there is no need to increase or decrease the output power; if $\Delta U_i$ is negative, then it means that for the corresponding energy storage power supply, $SOC_i < SOC_{ave}$, and the output power needs to be decreased; and if $\Delta U_i$ is positive, then it means that for the corresponding energy storage power supply, $SOC_i > SOC_{ave}$, and the output power needs to be increased.

The equation for calculation of the target voltage adjustment value is: $\Delta U_i = (SOC_i - SOC_{ave}) \times U_{rated}$, $i$ = 1, 2, 3, and $U_{rated}$ is the rated voltage of the energy storage power supply. Both $SOC_i$ and $SOC_{ave}$ are numbers from 0 to 1, which are expressed in percentage form. For example, the remaining electric quantity $SOC_1$ of the first energy storage power supply 11 is 80%, the remaining electric quantity $SOC_2$ of the second energy storage power supply 12 is 50%, the remaining electric quantity $SOC_3$ of the third energy storage power supply 13 is 30%, and $SOC_{ave}$ is 53.3%.

By adopting the electric quantity balance control method provided in the first preferred embodiment of the present invention, the split-phase dual-live wire system and the three-phase four-wire system described above control the output wire voltage to be constant, thereby providing stable power support for the load. Meanwhile, the output voltage of each single energy storage power supply can be adjusted in real time according to the remaining electric quantity SOC of each energy storage power supply and the power of the load so as to: increase the output on-load power of the energy storage power supply with high electric quantity, and decrease the output on-load power of the energy storage power supply with low electric quantity. Thus, the active electric quantity balance control of the split-phase double-live wire system and the three-phase four-wire system is realized, and the problem that the on-load endurance of the system is shortened due to inconsistency of the remaining electric quantities SOC is effectively solved.

Embodiment 2

The power grid in each country or region has its own unique voltage standard, and the common voltage standards are 110V, 220V and 240V or the like. Some countries use many different voltages. For example, in the United States, single-phase, single-phase three-wire and three-phase power supply systems are very popular, so single-phase electric power (120V), double live-wire output (240V) and three-phase electric power (208V) are available. The single-phase electric power (120V) is used for small common household loads, such as lighting, heating and small appliances. It provides constant AC current, which flows in a single direction, and has a single sine wave form. The dual-live wire output (240V) is used for larger loads, such as air conditioners, electric furnaces and washing machines or other heavy appliances. The dual-live wire output enables larger electrical loads to operate at lower current, thereby reducing the energy loss caused by heat. The dual-wire output is also commonly used in industrial and commercial places. In China, the three-phase four-wire power system is adopted. The electric power used in households is generally 220V, while that in factories is usually 380V. Based on these voltage standards and different power supply methods, the operating voltages of electrical devices (i.e., loads) are usually different, some electrical devices operate at 120V, some at 240V, and some at 380V.

The AC dual-live wire system composed of two independent energy storage power supplies or the AC three-phase system composed of three independent energy storage power supplies can meet different operating voltage requirements of different electrical loads. On the one hand, multiple energy storage power supplies are combined into one system for joint output (including dual-live wire output and three-phase power output), which can supply power for system load with large voltage requirements. On the other hand, each energy storage power supply still retains its single-phase power output at the rated voltage, which can supply power for single-phase loads (also called stand-alone loads) with small voltage requirements.

In an AC multi-phase system composed of multiple energy storage power supplies, when any energy storage power supply runs out of power, the dual-live wire output or three-phase power output cannot be supported, which results in system shutdown. Especially in the case where a single energy storage power supply is connected with a stand-alone load or the stand-alone load of the multiple energy storage power supplies is unbalanced, it will further lead to inconsistent power consumption of the energy storage power supplies included in the system. The energy storage power supply connected with a stand-alone load of a larger power will have shorter battery duration and its power will run out earlier than that of other energy storage power supplies connected with a stand-alone load with a lower power. On the other hand, all kinds of electrical devices can only work and be used normally under the rated voltage and within a certain voltage variation range. If the fluctuation of AC output voltage of each single energy storage power supply exceeds the allowable range, it will make the stand-alone loads operate under the condition of high or low voltage, which will directly shorten the service life of the electrical device, increase energy consumption, increase the possibility of electrical device damage and even endanger the safety of electricity use.

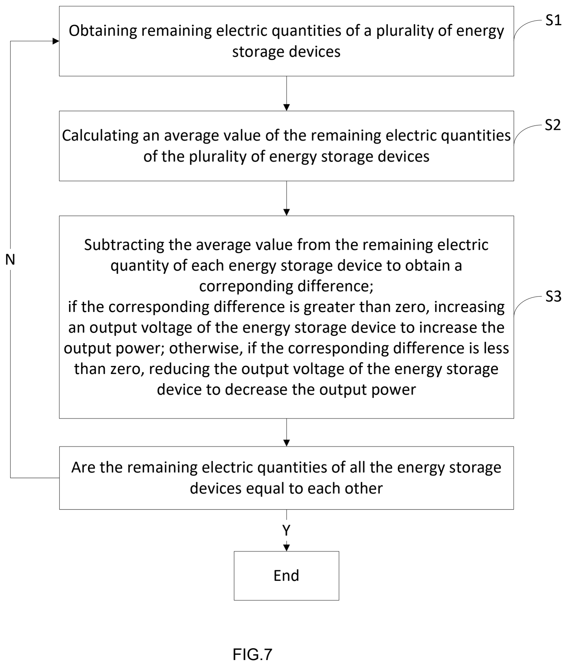

In order to effectively solve the problem that the on-load endurance of the system is shortened due to the inconsistency of the remaining electric quantities SOC, while taking the service life of the stand-alone load and electrical safety as well as system stability into consideration, as shown in FIG. 7, the embodiment 2 of the present invention discloses an electric quantity balance control method for an energy storage device alternating current multi-phase system, which includes the following steps: S1: obtaining remaining electric quantities of a plurality of energy storage devices; S2: calculating an average value of the remaining electric quantities of the plurality of energy storage devices; S3: subtracting the average value calculated in step S2 from the remaining electric quantity of each energy storage device to obtain a corresponding difference, and for each energy storage power supply, if the corresponding difference is greater than 0, increasing an output voltage of the energy storage device so as to increase output power of the energy storage device, otherwise, if the corresponding difference is less than 0, reducing the output voltage of the energy storage device so as to decrease the output power of the energy storage device; and iteratively executing steps S1 to S3 until the remaining electric quantities of all the energy storage devices become equal.

The step S3 specifically includes: subtracting the average value $SOC_{ave}$ calculated in step S2 from the remaining electric quantity $SOC_{i\_j}$ of the ith energy storage device to obtain the difference, and adjusting the output voltage of the corresponding energy storage device to a stepping target voltage value $U_{iRef\_j}$ to adjust the output power of the energy storage device, wherein the stepping target voltage value $U_{iRef\_j} = U_{rated} + \Delta U_{i\_j}$, $U_{rated}$ is the rated voltage of the energy storage device, $\Delta U_{i\_j}$ is a target voltage adjustment value at the $j$th voltage adjustment performed on the ith energy storage device that is calculated according to the difference, i=1 to n, n is the number of the energy storage devices, and $j$ is the current number of times for voltage adjustment.

In some embodiments, the equation for calculation of the target voltage adjustment value at the $j$th voltage adjustment performed on the $i$th energy storage device is: $\Delta U_{i\_j} = \Delta U_{SOC\_i\_j} * r2_i + \Delta U_{p\_i\_j} * r3_i$; wherein $\Delta U_{SOC\_i\_j}$ is a first target voltage adjustment value at the $j$th voltage adjustment performed on the ith energy storage device that is calculated according to the difference, $\Delta U_{p\_i\_j}$ is a second target voltage adjustment value at the $j$th voltage adjustment performed on the $i$th energy storage device that is calculated according to the change of the AC side output power of the $i$th energy storage device, $r2_i$ and $r3_i$ are weights, and $r2_i + r3_i = 1$. The equation for calculation of the first target voltage adjustment value at the jth voltage adjustment performed on the $i$th energy storage device is: $\Delta U_{SOC\_i\_j} = (SOC_{ij} - SOC_{ave}) \times U_{rated} \times r1_i$, wherein $r1_i$ is a proportional coefficient. Specifically, the value of $r1_i$ is 10% to 20%. The equation for calculation of the second target voltage adjustment value at the jth voltage adjustment performed on the $i$th energy storage device is: $\Delta U_{p\_i\_j} = K_{u\_i\_j} * \Delta U_{SOC\_i\_j}$, wherein $K_{u\_i\_j}$ is the power change ratio at the jth voltage adjustment performed on the ith energy storage device, and $K_{u\_i\_j} = (P_{m\_i\_j} - P_{m\text{-}k0\_i\_j})/P_{mMean\_i\_j}$, wherein $P_{m\_i\_j}$ is the AC side output power at the jth voltage adjustment performed on the ith energy storage device, $P_{mMean\_i\_j}$ is a periodic average of the AC side output power at the jth voltage adjustment performed on the ith energy storage device that is calculated by using sliding window filtering, and $P_{m\_k0\_i\_j}$ is the power value excluded from the sliding window filter at the jth voltage adjustment performed on the $i$th energy storage device.

The embodiment 2 of the present invention further discloses an energy storage device alternating current multi-phase system, which includes a plurality of energy storage devices, a system load and at least one stand-alone load, wherein the plurality of energy storage devices are in communication with each other, the AC output side live wires of the plurality of energy storage devices are respectively connected to the system load, and the neutral wires of the plurality of energy storage devices are connected to the neutral wire common point of the system load; the AC output side of at least one energy storage device in the plurality of energy storage devices is separately connected with a stand-alone load; and the energy storage device alternating current multi-phase system adopts the electric quantity balance control method as described in the above embodiment 2 to perform electric quantity balance control on the plurality of energy storage devices. The stand-alone load is a single-phase load connected to each independent energy storage power supply, and the stand-alone load of each energy storage power supply consumes the battery power of the corresponding energy storage power supply.

It further includes the following steps before the step S1: enabling the plurality of energy storage devices to communicate with each other for allocation of master and slave devices, and determining one of the plurality of energy storage devices as the master device and the other energy storage devices as the slave devices. In some embodiments, the master device is configured to: send a power frequency phase signal to the slave device when the power frequency cycle of the master device crosses zero; obtain the remaining electric quantities of the plurality of energy storage devices; obtain the target voltage value of each of the energy storage devices according to the electric quantity balance control method of the above embodiment 2 and send it to the corresponding slave device. The slave device is configured to: obtain and track the power frequency phase signal sent by the master device, and control the power frequency phase of the slave device to lag behind the power frequency phase of the master device.

In some embodiments, the number of the energy storage devices is two, the energy storage device alternating current multi-phase system is a split-phase dual live-wire system, and the power frequency phase difference between the two energy storage devices is 180°. In some other embodiments, the number of the energy storage devices is three, the energy storage device alternating current multi-phase system is a three-phase four-wire system, and the power frequency phase difference between the three energy storage devices is 120°.

The embodiment 2 of the present invention further discloses a storage medium storing a computer program, wherein the computer program is set to be executable by a processor to execute the steps of the electric quantity balance control method described in the above embodiment 2.

Optionally, the above storage medium may include, but is not limited to, various media that can store computer programs, such as a USB flash disk, a Read-Only Memory (ROM), a Random Access Memory (RAM), a mobile hard disk, a magnetic disk or an optical disk.

The energy storage device alternating current multi-phase system and the electric quantity balance control method therefor provided in the above embodiment 2 of the present invention will be further described hereinafter with reference to specific preferred embodiments.

The embodiment 2 of the present invention preferably provides a split-phase dual-live wire system, which is composed of two independent energy storage power supplies with AC output sides connected in series with an AC output phase difference of 180°, and neutral wires connected together to form a split-phase LI-N-L2 AC power supply system. Through the split-phase double-live wire system, the output AC voltage can be multiplied.

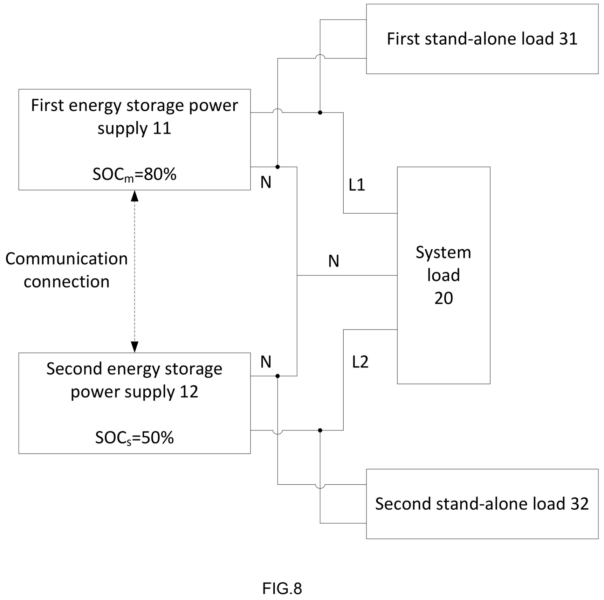

Specifically, as shown in FIG. 8, the split-phase dual-live wire system includes a first energy storage power supply 11 and a second energy storage power supply 12 that can output alternating current off grid, a system load 20 (in this embodiment, the system load is a line-to-line load), a first stand-alone load 31 and a second stand-alone load 32. The first energy storage power supply 11 and the second energy storage power supply 12 are in communication with each other, the AC output side neutral wires (N) of the first energy storage power supply 11 and the second energy storage power supply 12 are connected to the neutral wire common point of the system load 20, the live wire (L1) of the first energy storage power supply 11 and the live wire (L2) of the second energy storage power supply 12 are respectively connected to the system load 20, the AC output side of the first energy storage power supply 11 is connected to the first stand-alone load 31, and the AC output side of the second energy storage power supply 12 is connected to the second stand-alone load 32.

The output voltage $U_1$ of the first energy storage power supply 11 and the output voltage $U_2$ of the second energy storage power supply 12 in the split-phase dual-live wire system at the initial moment are both rated AC output voltage value $U_{rated}$ (100Vac or 120Vac).

In some embodiments, the electric quantity balance control method of the split-phase dual-live wire system includes the following steps:

C1: allocating master and slave devices;

The specific steps of allocating master and slave devices in this embodiment are the same as the specific steps of allocating master and slave devices in the embodiment 1. As shown in FIG. 3, the specific steps include: enabling two independent energy storage power supplies to communicate with each other, and then allocating the master and slave devices in a competitive manner to confirm whether the power supply is the master device; if the power supply is the master device, then obtaining its current remaining electric quantity $SOC_m$ and the current remaining electric quantity $SOC_s$ of the slave device, and calculating the target voltage value $U_{mRef}$ of the master device and the target voltage value $U_{sRef}$ of the slave device, and then sending the corresponding target voltage value $U_{sRef}$ to the slave device, and further sending a phase synchronization signal to the slave device when the master device crosses zero; if the power supply is not the master device, then obtaining the power frequency phase Thetam currently output by the master device, tracking the master device phase, controlling the slave device phase to lag behind the master device by 180 degrees, and obtaining its target voltage value $U_{sRef}$ sent by the master device.

In this specific embodiment, the first energy storage power supply 11 and the second energy storage power supply 12, which are independent of each other, communicate with each other to compete for the master device so that one is automatically allocated to be the master device and the other is allocated to be the slave device. In this embodiment, taking the case where the first energy storage power supply 11 is allocated to be the master device and the second energy storage power supply 12 is allocated to be the slave device as an example, then $U_m = U_1 = U_{rated}$, $U_s = U_2 = U_{rated}$, wherein $U_1$ represents the output voltage of the first energy storage power supply 11, $U_2$ represents the output voltage of the second energy storage power supply 12, $U_m$ represents the output voltage of the master device, and $U_s$ represents the output voltage of the slave device. The output voltages of the master device and the slave device are all equal to the rated AC output voltage value $U_{rated}$ at the initial moment. The master device is configured to obtain its remaining electric quantity $SOC_m$ and the current remaining electric quantity $SOC_s$ of the slave device, calculate the target voltage value $U_{mRef}$ of the master device and the target voltage value $U_{sRef}$ of the slave device, and then send the corresponding target voltage value $U_{sRef}$ to the slave device. The master device is further configured to send a power frequency phase signal to the slave device when the power frequency cycle of the master device crosses zero. The slave device is configured to obtain and track the power frequency phase signal sent by the master device, and at the same time, control the output phase of the slave device to differ from that of the master device by 180° and obtain its target voltage value $U_{sRef}$ sent by the master device.

In addition, it should be noted that in some embodiments, the master and slave devices may also be allocated in other ways for the energy storage power supplies. For example, one of the energy storage devices is taken as the master device by separately providing a control unit in the energy storage device, and other energy storage devices are taken as the slave devices. In the above embodiment, only one slave device is involved, and in the case involving multiple slave devices, the address allocation of slave devices can be done by any existing slave device address allocation method. For example, 1) address allocation is completed by free competition; 2) the address is set for each slave device by setting the dip switch; 3) the address of each slave device is set through the keyboard or human-machine interface; 4) the address of the slave devices is set one by one through the computer serial port software; 5) the slave device inquires the status of the bus to constantly wait for the idle state to communicate with the master device, and the address is reassigned if there is a station address conflict.

C2: obtaining remaining electric quantities of a plurality of energy storage power supplies, and calculating an average value of the remaining electric quantities of the plurality of energy storage power supplies; and then subtracting the average value from the remaining electric quantity of each energy storage power supply to obtain a corresponding difference, and for each energy storage power supply, if the corresponding difference is greater than 0, increasing an output voltage of the energy storage power supply so as to increase output power of the energy storage power supply, otherwise, if the corresponding difference is less than 0, reducing the output voltage of the energy storage power supply so as to decrease the output power of the energy storage power supply; and iteratively executing the aforesaid steps until the remaining electric quantities of all the energy storage power supplies become equal.

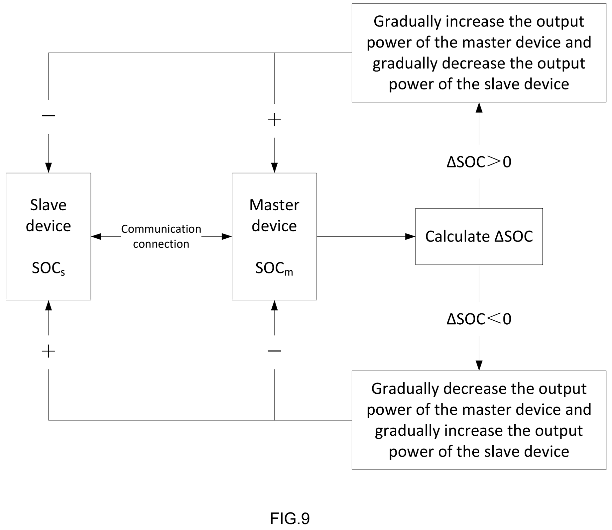

In this embodiment, the difference between the remaining electric quantities of the two energy storage power supplies is directly obtained, and electric quantity balance and output voltage control are carried out according to the difference being greater than 0 or less than 0. Specifically, as shown in FIG. 9, the master device calculates the current SOC difference between the master device and the slave device, denoted as: $\Delta SOC = SOC_m - SOC_s$, and the master device enters the electric quantity balance-output voltage control mode based on the current SOC difference $\Delta SOC$.

(1) If the master device determines that the current $\Delta SOC > 0$, then the current electric quantity of the master device is higher than that of the slave device; the master device increases the output power and the slave device decreases the output power, thus realizing SOC equalization;

(2) if the master device determines that the current $\Delta SOC < 0$, then the current electric quantity of the master device is lower than that of the slave device; the master device decreases the output power and the slave device increases the output power, thus realizing SOC equalization.

The output port wire voltage $U_{LL}$ (i.e., the line voltage between L1 and L2) of the system load 20 is equal to the sum of the master device output voltage $U_m$ and the slave device output voltage $U_s$: $U_{LL} = U_m + U_s$. In order to ensure the stability of on-load output, the split-phase dual-live wire system controls the output port wire voltage $U_{LL}$ to remain constant, i.e., 2 times of the rated voltage $U_{rated}$, such that $U_{LL} = U_{rated} * 2$. Therefore, the total output voltage of the split-phase dual-live wire system composed of two independent energy storage power supplies remains constant, i.e., $U_m + U_s = U_{rated} * 2$. Moreover, the AC output sides of the two energy storage power supplies in the split-phase dual-live wire system are connected in series, so the AC side currents of the two energy storage power supplies are equal, i.e., $I_m = I_s$, wherein $I_m$ is the current of the master device (i.e., the first energy storage power supply 11) and $I_s$ is the current of the slave device (i.e., the second energy storage power supply 12).

The output currents of the two energy storage power supplies in the split-phase double-live wire system are equal, so the adjustment of the output power of the energy storage power supply is realized by adjusting the AC output voltage. For example, if it is needed to increase the output power $P_m$ of the master device, then it is necessary to increase the current output voltage $U_m$ of the energy storage power supply to its corresponding target voltage value $U_{mRef}$, where $U_{mRef} = U_{rated} + \Delta U_{total}$ and $P_s = U_m * I_m$. Moreover, the output wire voltage of the split-phase dual-live wire system is defined by $U_{LL} = U_{rated} * 2 = U_m + U_s$. Since the output wire voltage of the system load 20 remains constant, when the output voltage of the master device increases, the slave device should correspondingly reduce its output voltage (reducing the current output voltage $U_s$ of the energy storage power supply to its corresponding target voltage value $U_{sRef}$), to decrease the output power thereof, i.e., $U_{sRef} = U_{rated} - \Delta U_{total}, P_s = U_s * I_s$.

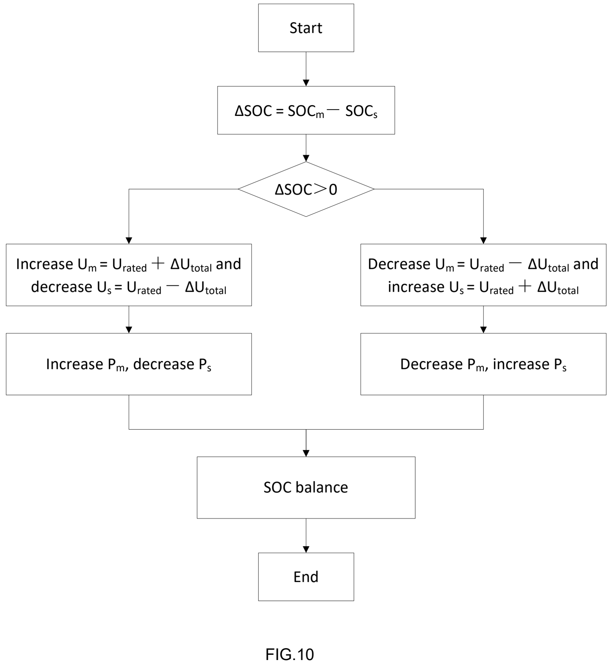

As shown in FIG. 10, when $\Delta SOC > 0$, the output voltage $U_m$ of the master device is increased, i.e., $U_m = U_{mRef} = U_{rated} + \Delta U_{total}$, and the output voltage $U_s$ of the slave device is decreased, i.e., $U_s = U_{sRef} = U_{rated} - \Delta U_{total}$, so as to further increase the output power $P_m$ of the master device and decrease the output power $P_s$ of the slave device, thus realizing SOC equalization. When $\Delta SOC < 0$, the output voltage $U_m$ of the master device is decreased, i.e., $U_m = U_{mRef} = U_{rated} - \Delta U_{total}$, and the output voltage $U_s$ of the slave device is increased, i.e., $U_s = U_{sRef} = U_{rated} + \Delta U_{total}$, so as to further decrease the output power $P_m$ of the master device and increase the output power $P_s$ of the slave device, thus realizing SOC equalization.

The total target voltage adjustment value $\Delta U_{total} = (\Delta SOC/2) * U_{rated}$, wherein $SOC_m$, $SOC_s$ and $\Delta SOC$ are all numbers from 0 to 1, which are expressed in percentage form. For example, the $SOC_m$ of the master device is 80%, the $SOC_s$ of the slave device is 50% and $\Delta SOC$ is 30%.

In the present invention, it is considered that if the adjustment range of $\Delta U_{total}$ is too large, then the SOC balance processing rate of the two energy storage power supplies will be large, which may affect the stability of the stand-alone load. In order to improve the stability of the stand-alone load, the preferred embodiment of the present invention realizes the adjustment of $\Delta U_{total}$ through two-stage judgment and calculation processing of $\Delta SOC$ and stand-alone output load power, and at the same time adopting the output voltage variable step control method. The specific implementation method is as follows:

(1) The master device calculates the first target voltage adjustment value $\Delta U_{SOC\_j}$ at the jth voltage adjustment according to the current SOC difference $\Delta SOC_{\_j}$ between the master device and the slave device:

$$\Delta U_{SOC\_j} = (\Delta SOC_{\_j}/2) \times U_{rated} \times r1,$$

wherein r1 is a proportional coefficient, which is usually related to the stand-alone AC output voltage and meets the utilization voltage range of conventional appliances; for example, the stand-alone AC output is 110V, and the value of r1 is (10%, 20%).

(2) Because the output voltage of each energy storage power supply is dynamically adjusted, in order to prevent the power fluctuation of the stand-alone load caused by the output voltage adjustment, output voltage smoothing processing at output power adjustment is additionally performed.

Each energy storage power supply calculates the second target voltage adjustment value $\Delta U_{p\_j}$ at the $j$th voltage adjustment according to the change of the respective AC side output power $P_{m\_j}$ by the following steps:

a. calculating the periodic average $P_{mMean\_j}$ of the AC output power at the $j$th voltage adjustment performed on the master device or the slave device by using sliding window filtering;
b. recording the power value $P_{m\_k0\_j}$ that is excluded from the sliding window filter at the $j$th voltage adjustment (the value at the beginning of the sliding window);
c. calculating the power change ratio $K_{u\_j}$ at the $j$th voltage adjustment:

$$K_{u\_j} = (P_{m\_j} - P_{m\_k0\_j})/P_{mMean\_j};$$

d. calculating the second target voltage adjustment value $\Delta U_{p\_j}$ at the $j$th voltage adjustment according to the output power fluctuation (the power change ratio $K_{u\_j}$):

$$\Delta U_{p\_j} = K_{u\_j} * \Delta U_{SOC\_j}.$$

(3) In order to satisfy the SOC dynamic adjustment rate and the stability of the system during voltage adjustment, the following equation may be adopted to calculate the target voltage adjustment value at the $j$th voltage adjustment:

$$\Delta U_{\_j} = \Delta U_{SOC\_j} * r2 + \Delta U_{p\_j} * r3;$$

wherein $r2$ and $r3$ are weights, and $r2 + r3 = 1$; if the weight of $r3$ is greater ($r3 > r2$), then the stand-alone power is more stable; and if the weight of $r2$ is greater ($r2 > r3$), then the system adjustment rate will be faster.

In a specific embodiment, the voltage adjustment step size may be selected to be obtained by averaging:

$$\Delta U_{\_j} = \Delta U_{SOC\_j} * 0.5 + \Delta U_{p_j} * 0.5.$$

By obtaining the target voltage adjustment value at the $j$th voltage adjustment, the stepping target voltage value corresponding to each voltage adjustment of the master device or the slave device can be calculated. When $\Delta SOC > 0$, the stepping target voltage value at the jth voltage adjustment performed on the master device is defined by $U_{mRef\_j} = U_{rated} + \Delta U_{\_j}$, and the stepping target voltage value at the $j$th voltage adjustment performed on the slave device is defined by $U_{sRef\_j} = U_{rated} - \Delta U_{\_j}$. When $\Delta SOC < 0$, the stepping target voltage value at the $j$th voltage adjustment performed on the master device is defined by $U_{mRef\_j} = U_{rated} - \Delta U_{\_j}$, and the stepping target voltage value at the $j$th voltage adjustment performed on the slave device is defined by $U_{sRef\_j} = U_{rated} + \Delta U_{\_j}$.

In this embodiment, two factors are taken into consideration for the target voltage adjustment value $\Delta U_{\_j}$ at the $j$th voltage adjustment: one factor is $\Delta U_{SOC\_j}$, which is used for the balance of electric quantities of the energy storage power supplies, the value of which is 10% to 20% of the total target voltage adjustment value $\Delta U_{total}$, and which reflects the rapid electric quantity balance of the system; the other factor is $\Delta U_{p\_j}$, which is used for making the power of each separate energy storage power supply more stable, and which reflects the stability of each energy storage power supply.

In order to make the split-phase dual-live wire system achieve the total electric quantity balance, the sum of voltages that need to be adjusted for the respective energy storage power supplies is the total target voltage adjustment value $\Delta U_{total}$ (if $\Delta SOC > 0$, the voltage of the master device is increased by $\Delta U_{total}$, and the voltage of the slave device is decreased by $\Delta U_{total}$; if $\Delta SOC < 0$, the voltage of the master device is decreased by $\Delta U_{total}$ and the voltage of the slave device is increased by $\Delta U_{total}$). However, in the present invention, the adjustment is not completed in one step, and instead, both $\Delta U_{SOC\_j}$ and $\Delta U_{p\_j}$ are taken into consideration, and the target voltage adjustment value for each time is $\Delta U_{\_j} = \Delta U_{SOC\_j} * r2 + \Delta U_{p\_j} * r3$; the output voltages of the master device and the slave device are adjusted stepwise/gradually, with $\Delta U_{total} = \Delta U_{\_1} + \Delta U_{\_2} + \Delta U_{\_3} + \cdots\cdots + \Delta U_{\_M}, j = 1,2,3, \cdots\cdots, M$. It means that it takes M adjustments to finally reach the total electric quantity balance.

Through the stepwise and gradual adjustment, the master device reaches the target voltage value $U_{mRef}$ and the slave device reaches the target voltage value $U_{sRef}$, so as to realize the stepwise and gradual adjustment of the output power $P_m$ of the master device and the output power $P_s$ of the slave device, thereby further realizing the adjustment of the battery discharge rate of the energy storage power supply so that the SOC of the two energy storage power supplies are actively balanced, and at the same time the whole system is more stable.

The embodiment 2 of the present invention further preferably provides a three-phase four-wire system, which is composed of three independent energy storage power supplies with AC output sides connected in star configuration with respective AC output phase difference of 120°, and neutral wires connected together to form a three-phase AC power supply system.

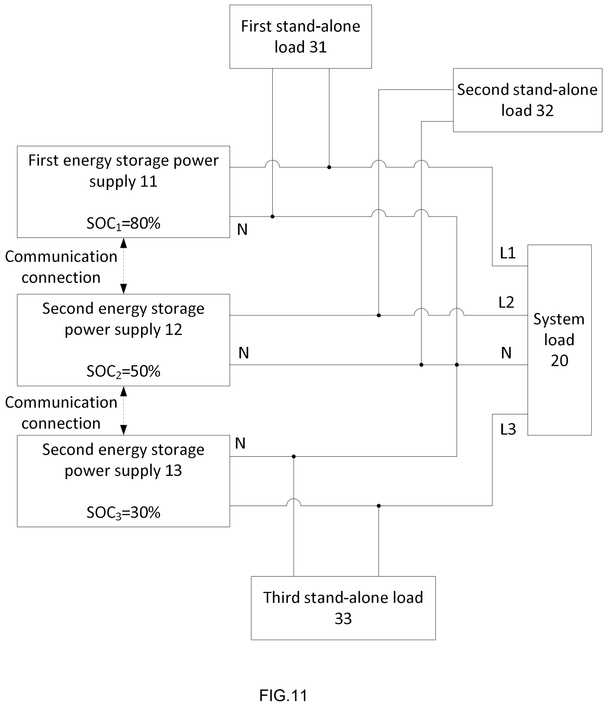

Specifically, as shown in FIG. 11, the three-phase four-wire system includes a first energy storage power supply 11, a second energy storage power supply 12 and a third energy storage power supply 13 that can output alternating current off grid, a system load 20 (in this embodiment, the system load is a three-phase load), a first stand-alone load 31, a second stand-alone load 32 and a third stand-alone load 33. The first energy storage power supply 11, the second energy storage power supply 12 and the third energy storage power supply 13 are in communication with each other, the AC output side neutral wires (N) of the first energy storage power supply 11, the second energy storage power supply 12 and the third energy storage power supply 13 are connected to the neutral wire common point of the system load 20, the live wire (L1) of the first energy storage power supply 11, the live wire (L2) of the second energy storage power supply 12 and the live wire (L3) of the third energy storage power supply 13 are respectively connected to the system load 20, the AC output side of the first energy storage power supply 11 is connected to the stand-alone load 31, the AC output side of the second energy storage power supply 12 is connected to the stand-alone load 32, and the AC output side of the third energy storage power supply 13 is connected to the stand-alone load 33.

The output voltage $U_1$ of the first energy storage power supply 11, the output voltage $U_2$ of the second energy storage power supply 12 and the output voltage $U_3$ of the third energy storage power supply 13 in the three-phase four-wire system at the initial moment are all rated AC output voltage value $U_{rated}$ (100Vac or 120Vac).

In some embodiments, the electric quantity balance control method of the three-phase four-wire system includes the following steps:

D1: allocating master and slave devices;

The specific steps of allocating the master and slave devices include: enabling three independent energy storage power supplies to communicate with each other, and automatically allocating the master and slave devices in a competitive manner so that one of the energy storage power supplies is determined as the master device while the other two energy storage power supplies are determined as the slave devices. The specific steps in the master and slave device allocation in this three-phase four-wire system differ from those in the split-phase dual-live wire system only in that the phase difference between the master device and the respective slave devices is 120°, while other specific process steps are the same, and this will not be further described herein.

D2: obtaining remaining electric quantities of a plurality of energy storage power supplies, and calculating an average value of the remaining electric quantities of the plurality of energy storage power supplies; and then subtracting the average value from the remaining electric quantity of each energy storage power supply to obtain a corresponding difference, and for each energy storage power supply, if the corresponding difference is greater than 0, increasing an output voltage of the corresponding energy storage power supply so as to increase output power of the energy storage power supply, otherwise, if the corresponding difference is less than 0, reducing the output voltage of the corresponding energy storage power supply so as to decrease the output power of the energy storage power supply; and iteratively executing the aforesaid steps until the remaining electric quantities of all the energy storage power supplies become equal.

In the three-phase four-wire system, the master device obtains the remaining electric quantities $SOC_1$, $SOC_2$, $SOC_3$ of the energy storage power supplies; the phase difference between the master device and the respective slave devices is 120°, and the total output voltage of the three-phase four-wire system composed of the three independent energy storage power supplies remains constant.

The average value SOC of the three energy storage power supplies is calculated: $SOC_{ave} = (SOC_1 + SOC_2 + SOC_3)/3$, and then the current $SOC_i$ ($i$=1, 2, 3) of the energy storage power supplies is compared with $SOC_{ave}$. If $SOC_i$ is equal to $SOC_{ave}$, then there is no need to increase or decrease the output power; if $SOC_i < SOC_{ave}$, then the output power is decreased; and if $SOC_i > SOC_{ave}$, then the output power is increased.

Because the total output voltage remains constant and the three-phase load remains unchanged, the total current I is unchanged, and thus the output power of each energy storage power supply is further increased or decreased by adjusting the output voltage of each energy storage power supply in the present invention. The output voltage $U_1$ of the first energy storage power supply 11 is adjusted to its corresponding target voltage value $U_{1Ref} = U_{rated} + \Delta U_{1total}$, the output voltage $U_2$ of the second energy storage power supply 12 is adjusted to its corresponding target voltage value $U_{2Ref} = U_{rated} + \Delta U_{2total}$; the output voltage $U_3$ of the third energy storage power supply 13 is adjusted to its corresponding target voltage value $U_{3Ref} = U_{rated} + \Delta U_{3total}$ ; wherein $\Delta U_{1tota} + \Delta U_{2tot} + \Delta U_{3to} = 0$ . If the total target voltage adjustment value $\Delta U_{itotal}$ ($i$ = 1,2,3) is zero, then it means that the remaining electric quantity of the corresponding energy storage power supply $SOC_i = SOC_{ave}$, and there is no need to increase or decrease the output power; if $\Delta U_{itotal}$ is negative, then it means that for the corresponding energy storage power supply, $SOC_i < SOC_{ave}$, and the output power needs to be decreased; and if $\Delta U_{itotal}$ is positive, then it means that for the corresponding energy storage power supply, $SOC_i > SOC_{ave}$, and the output power needs to be increased.

The equation for calculation of the total target voltage adjustment value is: $\Delta U_{itotal} = (SOC_i - SOC_{ave}) \times U_{rated}$, $i$ = 1,2,3, and $U_{rated}$ is the rated voltage of the energy storage power supply. Both $SOC_i$ and $SOC_{ave}$ are numbers from 0 to 1, which are expressed in percentage form. For example, the remaining electric quantity $SOC_1$ of the first energy storage power supply 11 is 80%, the remaining electric quantity $SOC_2$ of the second energy storage power supply 12 is 50%, the remaining electric quantity $SOC_3$ of the third energy storage power supply 13 is 30%, and $SOC_{ave}$ is 53.3%.

In the present invention, it is considered that if the adjustment range of $\Delta U_{itotal}$ is too large, then the SOC balance processing rate of the energy storage power supplies will be large, which may affect the stability of the stand-alone load. In order to improve the stability of the stand-alone load, the embodiment 2 of the present invention realizes the adjustment of $\Delta U_{itotal}$ through two-stage judgment and calculation processing of SOC difference and stand-alone output load power, and at the same time adopting the output voltage variable step control method. The specific implementation method is as follows:

(1) Each of the energy storage power supplies calculates its first target voltage adjustment value $\Delta U_{SOC\_i\_j}$ at the $j$th voltage adjustment respectively:

$$\Delta U_{SOC\_i\_j} = (SOC_{i\_j} - SOC_{ave}) \times U_{rated} \times r1_i,$$

wherein $r1_i$ is a proportional coefficient, which is usually related to the stand-alone AC output voltage and meets the utilization voltage range of conventional appliances; for example, the stand-alone AC output is 110V, and the value of $r1_i$ is (10%, 20%).

(2) Because the output voltage of each energy storage power supply is dynamically adjusted, in order to prevent the power fluctuation of the stand-alone load caused by the output voltage adjustment, output voltage smoothing processing at output power adjustment is additionally performed.

Each energy storage power supply calculates its second target voltage adjustment value $\Delta U_{p\_i\_j}$ at the jth voltage adjustment according to the change of the respective AC side output power $P_{m\_i\_j}$ by the following steps:

a. calculating the periodic average $P_{mMean\_i\_j}$ of the AC output power at the jth voltage adjustment of each energy storage power supply by using sliding window filtering;

b. recording the power value $P_{m\_k0\_i\_j}$ that is excluded from the sliding window filter at the jth voltage adjustment (the value at the beginning of the sliding window);

c. calculating the power change ratio $K_{u\_i\_j}$ at the jth voltage adjustment:

$$K_{u\_i\_j} = (P_{m\_i\_j} - P_{m\_k0\_i\_j})/P_{mMean\_i\_j};$$

d. calculating the second target voltage adjustment value $\Delta U_{p\_i\_j}$ at the jth voltage adjustment of each energy storage power supply according to the output power fluctuation (the power change ratio $K_{u\_i\_j}$):

$$\Delta U_{p\_i\_j} = K_{u\_i\_j} * \Delta U_{SOC\_i\_j}.$$

(3) In order to satisfy the SOC dynamic adjustment rate and the stability of the system during voltage adjustment, the following equation may be adopted to calculate the target voltage adjustment value at the jth voltage adjustment performed on the ith energy storage device:

$$\Delta U_{i\_j} = \Delta U_{SOC\_i\_j} * r2_i + \Delta U_{p\_i\_j} * r3_i;$$

wherein $r2_i$ and $r3_i$ are weights, and $r2_i + r3_i = 1$; if the weight of $r3_i$ is greater ($r3_i > r2_i$), then the stand-alone power is more stable; and if the weight of $r2_i$ is greater ($r2_i > r3_i$), then the system adjustment rate will be faster.

By obtaining the target voltage adjustment value at the jth voltage adjustment performed on the ith energy storage device, the stepping target voltage value corresponding to each voltage adjustment of the energy storage power supply can be calculated. When $SOC_{i\_j} > SOC_{ave}$ ($SOC_{i\_j}$ is the remaining electric quantity of the ith energy storage device at the jth voltage adjustment), the stepping target voltage value at the jth voltage adjustment performed on the ith energy storage device is $U_{iRef\_j} = U_{rated} + \Delta U_{i\_j}$. When $SOC_{i\_j} < SOC_{ave}$ ($SOC_{i\_j}$ is the remaining electric quantity of the ith energy storage device at the jth voltage adjustment), the stepping target voltage value at the jth voltage adjustment performed on the ith energy storage device is $U_{iRef\_j} = U_{rated} - \Delta U_{i\_j}$.

In this embodiment, two factors are taken into consideration for the target voltage adjustment value $\Delta U_{i\_j}$ at the jth voltage adjustment performed on the ith energy storage device: one factor is $\Delta U_{SOC\_i\_j}$, which is used for the balance of electric quantities of the energy storage power supplies, the value of which is 10% to 20% of the total target voltage adjustment value $\Delta U_{itotal}$, and which reflects the rapid electric quantity balance of the system; the other factor is $\Delta U_{p\_i\_j}$, which is used for making the power of each separate energy storage power supply more stable, and which reflects the stability of each energy storage power supply.

In order to make the three-phase four-wire system achieve the total electric quantity balance, the sum of voltages that need to be adjusted for the respective energy storage power supplies is the total target voltage adjustment value $\Delta U_{itotal}$ (i=1, 2, 3, and represents the ith energy storage power supply in the system). However, in the present invention, the adjustment is not completed in one step, and instead, both $\Delta U_{SOC\_i\_j}$ and $\Delta U_{p\_i\_j}$ are taken into consideration, and the target voltage adjustment value for each time is $\Delta U_{i\_j} = \Delta U_{SOC\_i\_j} * r2 + \Delta U_{p\_i\_j} * r3$; the output voltages of the master device and the slave device are adjusted stepwise/gradually, with $\Delta U_{itotal} = \Delta U_{i\_1} + \Delta U_{i\_2} + \Delta U_{i\_3} + \cdots\cdots + \Delta U_{i\_M}$, j = 1,2,3, $\cdots\cdots$ ,M. It means that it takes M adjustments to finally reach the total electric quantity balance.

Through the stepwise and gradual adjustment, the energy storage power supply reaches the target voltage value $U_{iRef}$, so as to realize the stepwise and gradual adjustment of the output power $P_{m\_i}$ of the energy storage power supply, thereby further realizing the adjustment of the battery discharge rate of the energy storage power supply so that the SOC of the energy storage power supplies are actively balanced, and at the same time the whole system is more stable.

By adopting the electric quantity balance control method provided in the embodiment 2 of the present invention, the split-phase dual-live wire system and the three-phase four-wire system described above control the output wire voltage to be constant, thereby providing stable power support for the load. Meanwhile, the output voltage of each single energy storage power supply can be adjusted in real time according to the remaining electric quantity SOC of each energy storage power supply and the power of the load so as to: increase the output on-load power of the energy storage power supply with high electric quantity, and decrease the output on-load power of the energy storage power supply with low electric quantity. Thus, the active electric quantity balance control of the split-phase double-live wire system and the three-phase four-wire system is realized, and the problem that the on-load endurance of the system is shortened due to inconsistency of the remaining electric quantities SOC is effectively solved. Meanwhile, the stability of the respective stand-alone load is taken into consideration at each adjustment of the output voltage, and by gradually adjusting the output voltage of each energy storage power supply stepwise in a cyclic manner, the power fluctuation of the stand-alone load is prevented so that the stand-alone load can work and be used normally under the rated voltage and within a certain voltage variation range, thereby making the system more stable. On the one hand, it avoids the inconsistency of power consumption of the energy storage power supplies included in the system, so that the battery duration of the energy storage power supplies is consistent. On the other hand, it ensures that all kinds of electrical devices can work and be used normally under the rated voltage and within a certain voltage variation range, and at the same time, it also avoids the operation of stand-alone loads under the condition of high or low voltages, thereby greatly prolonging the service life of the electrical devices, reducing energy consumption, reducing the possibility of electrical device damage to the greatest extent, and ensuring electrical safety.

The background of the present invention may contain background information about the problem or context of the present invention, rather than describing the prior art by others. Therefore, what is contained in the background section is not an admission of the applicant to the prior art.

What described above is a further detailed description of the present invention in combination with specific/-preferred embodiments, and it should not be considered that the specific implementation of the present invention is limited to these descriptions. For those of ordinary skill in the art, several substitutions or modifications to these described embodiments can be made without departing from the concept of the present invention, and these substitutions or modifications should all be regarded as belonging to the scope claimed in the present invention. In the description of this specification, descriptions referring to the terms "one embodiment", "some embodiments", "preferred embodiments", "examples", "specific examples" or "some examples" mean that specific features, structures, materials or characteristics described in connection with this embodiment or example are included in at least one embodiment or example of the present invention. In this specification, the schematic expressions of the above terms are not necessarily aimed at the same embodiment or example. Moreover, the specific features, structures, materials or characteristics described may be combined in any one or more embodiments or examples in a suitable manner. In addition, those skilled in the art can integrate and combine different embodiments or examples and features of different embodiments or examples described in this specification without contradiction therebetween. Although the embodiments of the present invention and advantages thereof have been described in detail, it should be understood that various changes, substitutions and alterations can be made herein without departing from the scope defined by the appended claims.

**Claims**

1. An electric quantity balance control method for an energy storage device alternating current multi-phase system, being **characterized in that**, the method comprises the following steps:

   S1: obtaining remaining electric quantities of a plurality of energy storage devices;
   S2: calculating an average value of the remaining electric quantities of the plurality of energy storage devices; and
   S3: subtracting the average value calculated in step S2 from the remaining electric quantity of each energy storage device to obtain a corresponding difference, and for each energy storage device, if the corresponding difference is greater than 0, increasing an output voltage of the energy storage device to increase its output power; otherwise, if the corresponding difference is less than 0, reducing the output voltage of the energy storage device to decrease its output power .

2. The electric quantity balance control method according to Claim 1, being **characterized in that**, step S3 specifically comprises:

subtracting the average value $SOC_{ave}$ calculated in step S2 from the remaining electric quantity $SOC_i$ of the ith energy storage device to obtain the difference, and adjusting the output voltage of the corresponding energy storage device to a target voltage value $U_{iRef}$ to adjust the output power of the energy storage device, wherein the target voltage value is defined by $U_{iRef} = U_{rated} + \Delta U_i$, $U_{rated}$ is the rated voltage of the energy storage device, $\Delta U_i$ is a target voltage adjustment value calculated according to the difference, $i$=1 to n, and n is the number of the energy storage devices.

3. The electric quantity balance control method according to Claim 2, being **characterized in that**, the target voltage adjustment value is defined by

$$\Delta U_i = (SOC_i - SOC_{ave}) \times U_{rated}.$$

4. The electric quantity balance control method according to Claim 1, being **characterized in that**, after step S3, the method further comprises:iteratively executing steps S1 to S3 until the remaining electric quantities of all the energy storage devices become equal.

5. The electric quantity balance control method according to Claim 4, being **characterized in that**, step S3 specifically comprises:
subtracting the average value $SOC_{ave}$ calculated in step S2 from the remaining electric quantity $SOC_{i\_j}$ of the $i$th energy storage device to obtain the difference, and adjusting the output voltage of the corresponding energy storage device to a stepping target voltage value $U_{iRef\_j}$ to adjust the output power of the energy storage device, wherein the stepping target voltage value is defined by $U_{iRef\_j} = U_{rated} + \Delta U_{i\_j}$, $U_{rated}$ is the rated voltage of the energy storage device, $\Delta U_{i\_j}$ is a target voltage adjustment value at the $j$th voltage adjustment performed on the ith energy storage device that is calculated according to the difference, $i$=1 to n, n is the number of the energy storage devices, and $j$ is the current number of times for voltage adjustment.

6. The electric quantity balance control method according to Claim 5, being **characterized in that**, the target voltage adjustment value at the jth voltage adjustment performed on the ith energy storage device is defined by $\Delta U_{i\_j} = \Delta U_{SOC\_i\_j} * r2_i + \Delta U_{p\_i\_j} * r3_i$, $\Delta U_{SOC\_i\_j}$ is a first target voltage adjustment value at the $j$th voltage adjustment performed on the $i$th energy storage device that is calculated according to the difference, $\Delta U_{p\_i\_j}$ is a second target voltage adjustment value at the jth voltage adjustment performed on the $i$th energy storage device that is calculated according to the change of the AC side output power of the $i$th energy storage device, $r2_i$ and $r3_i$ are weights, and $r2_i + r3_i = 1$.

7. The electric quantity balance control method according to Claim 6, being **characterized in that**, the first target voltage adjustment value at the $j$th voltage adjustment performed on the $i$th energy storage device is defined by:
$\Delta U_{SOC\_i\_j} = (SOC_{i\_j} - SOC_{ave}) \times U_{rated} \times r1_i$, $r1_i$ is a proportional coefficient, $SOC_{i\_j}$.

8. **The** electric quantity balance control method according to Claim 7, being **characterized in that**, the value of $r1_i$ is 10% to 20%.

9. **The** electric quantity balance control method according to Claim 6, being **characterized in that**, the second target voltage adjustment value at the jth voltage adjustment performed on the ith energy storage device is defined by $\Delta U_{p\_i\_j} = K_{u\_i\_j} * \Delta U_{SOC\_i\_j}$, wherein $K_{u\_i\_j}$ is the power change ratio at the jth voltage adjustment performed on the ith energy storage device, and defined by $K_{u\_i\_j} = (P_{m\_i\_j} - P_{m\_k0\_i\_j})/P_{mMean\_i\_j}$, $P_{m\_i\_j}$ is the AC side output power at the $j$th voltage adjustment performed on the ith energy storage device, $P_{mMean\_i\_j}$ is a periodic average of the AC side output power at the $j$th voltage adjustment performed on the $i$th energy storage device that is calculated by using sliding window filtering, and $P_{m\_k0\_i\_j}$ is the power value excluded from the sliding window filter at the $j$th voltage adjustment performed on the ith energy storage device.

10. An energy storage device alternating current multi-phase system, being **characterized in that**, the system comprises:

a plurality of energy storage devices and a system load, wherein the plurality of energy storage devices are in communication with each other, and the AC output side live wires of the plurality of energy storage devices are respectively connected to the system load, the neutral wires of the plurality of energy storage devices are connected to the neutral wire common point of the system load; and
the energy storage device alternating current multi-phase system adopts the electric quantity balance control method according to any of Claims 1 to 9 to perform electric quantity balance control on the plurality of energy storage devices.

11. The energy storage device alternating current multi-phase system according to Claim 10, being **characterized in that**, the system further comprises at least one stand-alone load, and the AC output side of at least one of the plurality of energy storage devices is separately connected with the stand-alone load.

12. The energy storage device alternating current multi-phase system according to Claim 10, being **characterized in that**, the system is further configured to perform the following steps before the step S1:
enabling the plurality of energy storage devices to communicate with each other for allocation of master and slave devices, and determining one of the plurality of energy storage devices as the master device and the other energy storage devices as the slave devices.

13. The energy storage device alternating current multi-phase system according to Claim 12, being **characterized in that**, the master device is configured to:

   send a power frequency phase signal to the slave device when the power frequency cycle of the master device crosses zero;
   obtain the respective remaining electric quantities of the plurality of energy storage devices;
   obtain the respective target voltage values of the energy storage devices according to the electric quantity balance control method according to any of Claims 2, 3 or 5 to 9 and send it to the corresponding slave device.

14. The energy storage device alternating current multi-phase system according to Claim 12, being **characterized in that**, the slave device is configured to:
obtain and track the power frequency phase signal sent by the master device, and control the power frequency phase of the slave device to lag behind the power frequency phase of the master device.

15. The energy storage device alternating current multi-phase system according to Claim 14, being **characterized in that**, the number of the energy storage devices is two, the energy storage device alternating current multi-phase system is a split-phase dual live-wire system, and the power frequency phase of the slave device lags behind the power frequency phase of the master device by 180°.

16. **The** energy storage device alternating current multi-phase system according to Claim **14,** being **characterized in that**, the number of the energy storage devices is three, the energy storage device alternating current multi-phase system is a three-phase four-wire system, the number of the slave devices is two, and the power frequency phase difference among the three energy storage devices is 120°.

17. A storage medium, being **characterized in that**, storing a computer program, wherein the computer program is set to be executable by a processor to execute the electric quantity balance control method according to any of Claims 1 to 9.

Obtaining remaining electric quantities of a plurality of energy storage devices — S1

Calculating an average value of the remaining electric quantities of the plurality of energy storage devices — S2

Subtracting the average value from the remaining electric quantity of each energy storage device to obtain a corresponding difference;
if the corresponding difference is greater than zero, increasing an output voltage of the energy storage device to increase the output power; otherwise, if the corresponding difference is less than zero, reducing the output voltage of the energy storage device to decrease the output power — S3

FIG.1

FIG.2

```
                    ┌──────────────┐
                    │    Start     │
                    └──────┬───────┘
                           │
                           ▼
        ┌──────────────────────────────────────┐
        │     Enabling two independent energy   │
        │        storage power supplies to      │
        │       communicate with each other     │
        └──────────────────┬───────────────────┘
                           │
                           ▼
        ┌──────────────────────────────────────┐
        │   Allocating master and slave devices  │
        │          in a competitive manner       │
        └──────────────────┬───────────────────┘
                           │
                           ▼
                    ╱─────────────╲
                   ╱  Self check:   ╲         N
                  ◄   Master device ? ──────────────┐
                   ╲                ╱                │
                    ╲─────────────╱                 │
                           │ Y                       │
                           ▼                         ▼
        ┌─────────────────────────┐    ┌──────────────────────────┐
        │  Obtaining SOCₘ and SOCₛ │    │ Obtaining power frequency │
        │                          │    │  phase Thetam currently    │
        │                          │    │  output by the master      │
        │                          │    │        device              │
        └────────────┬────────────┘    └─────────────┬────────────┘
                     │                                │
                     ▼                                ▼
        ┌─────────────────────────┐    ┌──────────────────────────┐
        │ Sending target voltage   │    │  Tracking the master      │
        │  value U_sRef to the     │    │     device phase          │
        │      slave device        │    │                           │
        └────────────┬────────────┘    └─────────────┬────────────┘
                     │                                │
                     ▼                                ▼
        ┌─────────────────────────┐    ┌──────────────────────────┐
        │ Sending a phase          │    │ Controlling the slave     │
        │ synchronization signal    │    │ device phase to lag       │
        │ when the master device   │    │ behind the master device  │
        │      crosses zero         │    │        by 180°            │
        └────────────┬────────────┘    └─────────────┬────────────┘
                     │                                │
                     │◄───────────────────────────────┘
                     ▼
                ┌──────────┐
                │   End    │
                └──────────┘
```

Obtaining $SOC_m$ and $SOC_s$

Sending target voltage value $U_{sRef}$ to the slave device

FIG.3

FIG.4

```
                    ┌──────────┐
                    │  Start   │
                    └────┬─────┘
                         │
                         ▼
              ┌────────────────────────┐
              │ ΔSOC = SOCₘ — SOCₛ      │
              └───────────┬────────────┘
                          │
                          ▼
                     ◇ ΔSOC＞0 ◇
```

Start

$\Delta SOC = SOC_m - SOC_s$

$\Delta SOC > 0$

Increase $U_m = U_{rated} + \Delta U$ and decrease $U_s = U_{rated} - \Delta U$

Decrease $U_m = U_{rated} - \Delta U$ and increase $U_s = U_{rated} + \Delta U$

Increase $P_m$, decrease $P_s$

Decrease $P_m$, increase $P_s$

SOC balance

End

FIG.5

FIG.6

Obtaining remaining electric quantities of a plurality of energy storage devices ⌐ S1

Calculating an average value of the remaining electric quantities of the plurality of energy storage devices ⌐ S2

Subtracting the average value from the remaining electric quantity of each energy storage device to obtain a correponding difference;
if the corresponding difference is greater than zero, increasing an output voltage of the energy storage device to increase the output power; otherwise, if the corresponding difference is less than zero, reducing the output voltage of the energy storage device to decrease the output power ⌐ S3

N

Are the remaining electric quantities of all the energy storage devices equal to each other

Y

End

FIG.7

FIG.8

Gradually increase the output
power of the master device and
gradually decrease the output
power of the slave device

$-$　　　　　$+$

Slave
device

SOC$_s$

Communication
connection

Master
device

SOC$_m$

Calculate ΔSOC

ΔSOC＞0

ΔSOC＜0

$+$　　　　　$-$

Gradually decrease the output
power of the master device and
gradually increase the output
power of the slave device

FIG.9

FIG.10

First stand-alone
load 31

Second stand-alone
load 32

First energy storage power
supply 11

$SOC_1=80\%$

N

Communication
connection

Second energy storage
power supply 12

$SOC_2=50\%$

N

Communication
connection

Second energy storage
power supply 13

N

$SOC_3=30\%$

L1

L2

N

L3

System
load
20

Third stand-alone load
33

FIG.11

## INTERNATIONAL SEARCH REPORT

International application No.

**PCT/CN2023/128065**

| A. | CLASSIFICATION OF SUBJECT MATTER |
|---|---|

H02J 3/32(2006.01)i; H02J 7/00(2006.01)i; H01M 10/42(2006.01)i; H01M 10/44(2006.01)i

According to International Patent Classification (IPC) or to both national classification and IPC

| B. | FIELDS SEARCHED |
|---|---|

Minimum documentation searched (classification system followed by classification symbols)

IPC: H02J, H01M

Documentation searched other than minimum documentation to the extent that such documents are included in the fields searched

Electronic data base consulted during the international search (name of data base and, where practicable, search terms used)

CNTXT; ENTXTC; ENTXT; DWPI; CNKI; 储能, 电池, 剩余电量, 荷电状态, 均衡, 平衡, 平均值, 差值, 输出电压, 输出功率, SOC, energy, storage, battery, cell, balance, electric, quantity, average, value, difference, output, voltage, power

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116094016 A (SHENZHEN POWEROAK NEWENER CO., LTD.) 09 May 2023 (2023-05-09) <br> claims 1-10, description, paragraphs 21-51, and figures 1-6 | 1-3, 10, 12-17 |
| PX | CN 116094017 A (SHENZHEN POWEROAK NEWENER CO., LTD.) 09 May 2023 (2023-05-09) <br> claims 1-10, description, paragraphs 22-72, and figures 1-6 | 1, 4-17 |
| X | CN 109638909 A (STATE GRID HUBEI ELECTRIC POWER CO., LTD. ELECTRIC POWER RESEARCH INSTITUTE et al.) 16 April 2019 (2019-04-16) <br> description, paragraphs 26-52, and figures 1-5 | 1-3, 17 |
| Y | CN 109638909 A (STATE GRID HUBEI ELECTRIC POWER CO., LTD. ELECTRIC POWER RESEARCH INSTITUTE et al.) 16 April 2019 (2019-04-16) <br> description, paragraphs 26-52, and figures 1-5 | 4-16 |
| Y | CN 112310990 A (STATE GRID TIANJIN ELECTRIC POWER COMPANY MARKETING SERVICE CENTER et al.) 02 February 2021 (2021-02-02) <br> description, paragraphs 4-90, and figures 1-12 | 4-9 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 February 2024** | **07 February 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| | International application No. |
|---|---|
| | **PCT/CN2023/128065** |

| C. | DOCUMENTS CONSIDERED TO BE RELEVANT | |
|---|---|---|
| Category* | Citation of document, with indication, where appropriate, of the relevant passages | Relevant to claim No. |
| Y | CN 114285056 A (LISHUI POWER SUPPLY CO. OF STATE GRID ZHEJIANG ELECTRIC POWER CO., LTD.) 05 April 2022 (2022-04-05) description, paragraphs 33-47, and figures 1-4 | 10-16 |

Form PCT/ISA/210 (second sheet) (July 2022)

## INTERNATIONAL SEARCH REPORT
### Information on patent family members

International application No.

**PCT/CN2023/128065**

| Patent document cited in search report | | | Publication date (day/month/year) | Patent family member(s) | | | Publication date (day/month/year) |
|---|---|---|---|---|---|---|---|
| CN | 116094016 | A | 09 May 2023 | CN | 116094016 | B | 27 June 2023 |
| CN | 116094017 | A | 09 May 2023 | CN | 116094017 | B | 30 June 2023 |
| CN | 109638909 | A | 16 April 2019 | None | | | |
| CN | 112310990 | A | 02 February 2021 | CN | 112310990 | B | 04 August 2023 |
| CN | 114285056 | A | 05 April 2022 | None | | | |

Form PCT/ISA/210 (patent family annex) (July 2022)